# DEMANDE DE BREVET EUROPEEN

(11) **EP 2 080 655 A1**
(43) Date de publication de la demande: **22.07.2009**
(21) Numéro de dépôt: 09150023.1
(22) Date de dépôt: 05.01.2009
(51) Int. Cl.: B60J 10/08

(54) **Joint d'ouvrant de véhicule automobile comprenant une butée de claquage**

(30) Priorité: 17.01.2008 FR 0850284
(71) Demandeur: Peugeot Citroën Automobiles SA, 78943 Vélizy-Villacoublay Cedex (FR)
(72) Inventeur: Fortin, Cyril, 78220 Guyancourt (FR); Becker, Patrice, 92410 Ville d'Avray (FR)

(57) **Abrégé**

Ce joint d'ouvrant est destiné à être disposé sur la périphérie d'une ouverture (10) d'ouvrant (4) afin de recevoir de façon étanche une vitre de l'ouvrant (4) en position de fermeture, le joint (20) comprenant au moins une branche supérieure (22), destinée à être disposée sur le bord supérieur (12) de l'ouverture (10), une branche latérale arrière (24) et une branche latérale avant (26) s'étendant à partir de la branche supérieure (22), destinées à être disposées respectivement sur le bord latéral arrière (14) et sur le bord latéral avant (16) de l'ouverture (10). Le joint (20) comprend une butée (30) saillant sensiblement perpendiculairement du plan longitudinal, ladite butée (30) étant destinée à s'étendre vers la caisse (2) du véhicule automobile, afin d'amortir le choc entre l'ouvrant (4) et la caisse (2) du véhicule lors de la fermeture dudit ouvrant (4).

## Description

La présente invention concerne un joint d'ouvrant de véhicule automobile du type destiné à être disposé sur la périphérie d'une ouverture d'ouvrant afin de recevoir de façon étanche une vitre de l'ouvrant en position de fermeture, le joint comprenant au moins une branche supérieure, destinée à être disposée sur le bord supérieur de l'ouverture, une branche latérale arrière et une branche latérale avant s'étendant à partir de la branche supérieure, destinées à être disposées respectivement sur le bord latéral arrière et sur le bord latéral avant de l'ouverture.

L'invention concerne également un ouvrant de véhicule automobile comprenant un tel joint et un véhicule automobile comprenant un tel ouvrant.

Lors de la fermeture d'un ouvrant de véhicule automobile, notamment une porte du véhicule, l'ouvrant entre en contact avec la caisse du véhicule automobile. Si la porte est claquée, le choc entre l'ouvrant et la caisse peut provoquer des éclats de peinture de la carrosserie et émettre un bruit métallique de tôle désagréable pour les passagers du véhicule.

Afin de pallier cet inconvénient, une butée souple, dite « butée de claquage », est ajoutée sur l'ouvrant pour s'interposer entre l'ouvrant et la caisse lors de la fermeture de l'ouvrant et amortir le choc provoqué par la fermeture. Cette butée est rapportée sur la doublure de l'ouvrant et fixée à un endroit de la doublure qui entre en contact avec la caisse lors de la fermeture de l'ouvrant.

Cependant une telle butée de claquage présente un certain nombre d'inconvénients. En effet, la butée est une pièce rapportée, ce qui augmente le temps de montage de l'ouvrant et entraîne une baisse de la cadence de production d'un véhicule. De plus, la butée ne présente pas un aspect esthétique agréable à l'oeil en donnant une impression de pièce ajoutée qui ne s'intègre pas à l'ouvrant. La fixation de la butée est fragile et la butée peut facilement être arrachée de l'ouvrant. En outre, la position de la butée n'est pas optimale car, pour faciliter le montage, elle n'est pas placée à l'endroit où le bras de levier est le plus grand lors de la fermeture de l'ouvrant.

L'un des buts de l'invention est de pallier ces inconvénients en proposant un joint d'ouvrant de véhicule automobile permettant de réaliser la fonction de « butée de claquage » résistant à l'arrachage, facilitant le montage de l'ouvrant, présentant un aspect agréable et optimisant la position de la butée.

A cet effet, l'invention concerne un joint d'ouvrant du type précité, dans lequel le joint comprend une butée saillant sensiblement perpendiculairement de la branche supérieure, ladite butée étant destinée à s'étendre vers la caisse du véhicule automobile, afin d'amortir le choc entre l'ouvrant et la caisse du véhicule lors de la fermeture dudit ouvrant.

Selon d'autres caractéristiques du joint d'ouvrant :
- la butée est disposée dans le coin formé par la branche supérieure et la branche latérale arrière ;
- le joint et la butée sont formés d'une seule pièce ;
- la branche supérieure comprend au moins une lèvre extérieure, par laquelle le joint est fixé sur le bord supérieur de l'ouverture ; et
- la butée comprend une tige solidaire à une de ses parties extrêmes du coin formé par la branche supérieure et par la branche latérale arrière et une tête solidaire de la tige à son autre partie extrême, ladite tête s'étendant sensiblement perpendiculairement à la tige.

L'invention concerne également un ouvrant de véhicule automobile, du type comprenant un panneau d'ouvrant et un encadrement d'ouverture fixés respectivement à une doublure d'ouvrant et localement l'un à l'autre, le panneau et l'encadrement d'ouverture étant destinés à s'étendre à l'extérieur du véhicule et la doublure étant destinée à s'étendre à l'intérieur du véhicule, l'encadrement et la doublure comprenant chacun une ouverture disposée l'une en regard de l'autre, un joint d'ouvrant étant disposé entre l'encadrement et la doublure d'ouvrant sur la périphérie desdites ouvertures , dans lequel le joint est tel que décrit ci-dessus.

Selon une autre caractéristique de l'ouvrant :
- la doublure comprend une découpe, la butée du joint étant introduite dans ladite découpe de sorte à saillir de la doublure d'ouvrant vers l'intérieur du véhicule automobile ; et
- l'encadrement comprend une échancrure, la butée du joint étant introduite dans ladite échancrure, l'échancrure étant disposée au droit de la découpe pratiquée sur la doublure d'ouvrant.

L'invention concerne également un véhicule automobile comprenant une caisse et un ouvrant tel que décrit ci-dessus, la butée étant disposée entre l'ouvrant et la caisse lorsque l'ouvrant est fermé.

D'autres aspects et avantages de l'invention apparaîtront à la lecture de la description qui suit, donnée à titre d'exemple et faite en référence aux dessins annexés, dans lesquels :
- la Fig. 1 est une représentation schématique partielle en perspective d'une caisse de véhicule automobile, à laquelle une doublure d'ouvrant est fixée, un joint d'ouvrant selon l'invention étant fixé à la doublure,
- la Fig. 2 est une représentation schématique en perspective d'une partie du joint d'ouvrant de la Fig. 1, montrant la butée selon l'invention,
- la Fig. 3 est une représentation schématique en perspective d'une partie de l'ouvrant montrant la butée selon l'invention.

Dans la description, les termes « intérieur », « extérieur », « supérieur », « inférieur », « avant », « arrière », « longitudinal », etc. sont définis selon les directions usuelles d'un véhicule automobile monté.

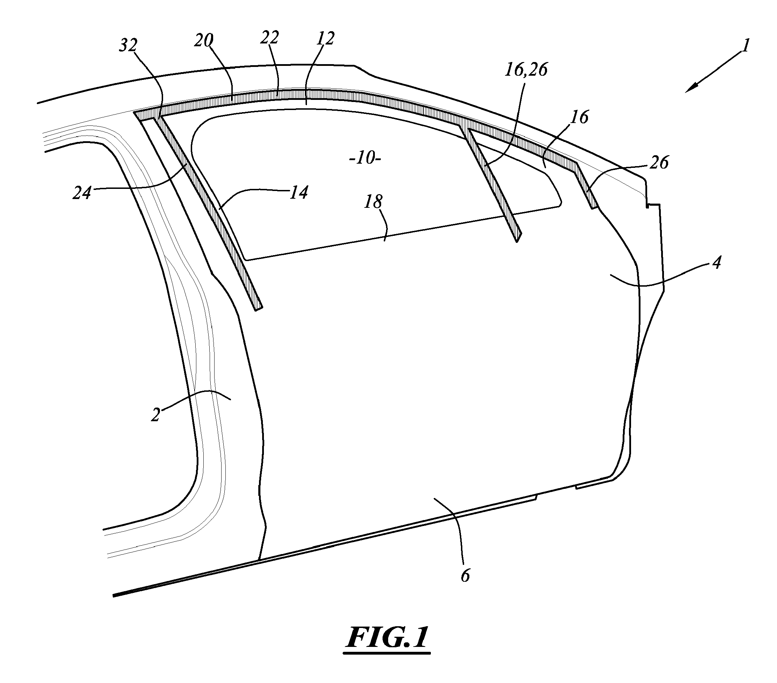

En référence à la Fig. 1, on décrit un véhicule automobile 1 comprenant une caisse 2 et au moins un ouvrant 4, ici une porte avant, mobile entre une position d'ouverture permettant l'accès à l'intérieur de la caisse 2, et une position de fermeture, dans laquelle l'ouvrant 4 est rabattu sur la caisse 2.

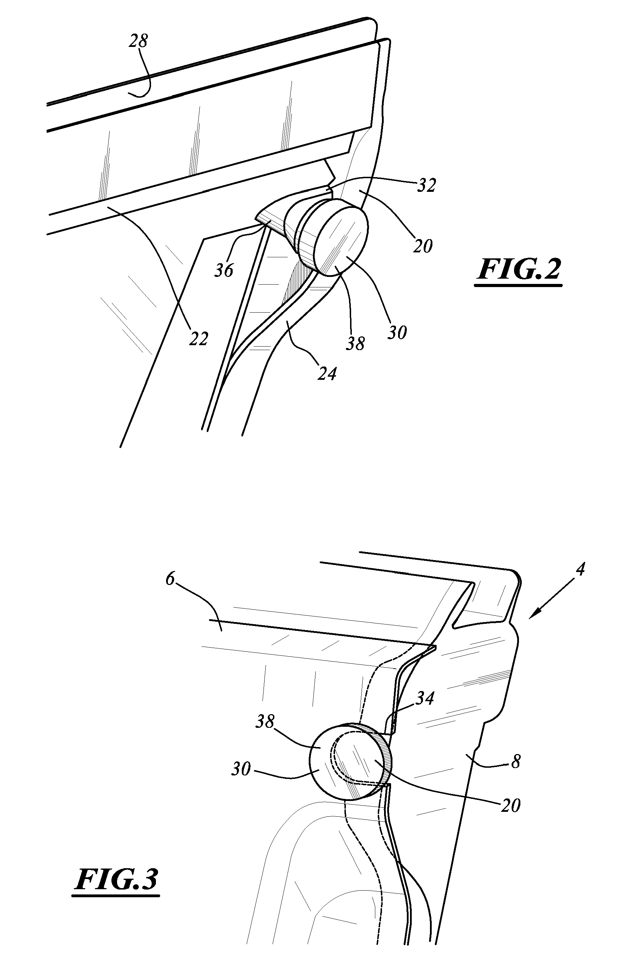

L'ouvrant 4 comprend une doublure d'ouvrant 6, s'étendant vers l'intérieur de la caisse 2 lorsque l'ouvrant 4 est fermé, ainsi qu'un panneau d'ouvrant et un encadrement de vitre 8 (figure 3), disposé verticalement au-dessus du panneau d'ouvrant et s'étendant vers l'extérieur de la caisse 2 lorsque l'ouvrant 4 est fermé. La doublure 6 et l'encadrement de vitre 8 sont fixés l'un à l'autre et comprennent chacun une ouverture 10 disposée l'une en regard de l'autre. Afin de fermer l'ouverture 10, une vitre (non représentée) est disposée et logée en position de fermeture dans l'espace entre la doublure 6 et l'encadrement 8, tandis qu'en position d'ouverture de l'ouverture 10, la vitre est logée dans l'espace entre la doublure 6 et le panneau d'ouvrant.

L'ouverture 10 est définie par un bord supérieur 12, un bord latéral arrière 14, un bord latéral avant 16 et un bord inférieur 18 de l'ouvrant 4, comme représenté sur la Fig. 1. Par bord arrière et bord avant, on entend que le bord arrière s'étend plus en arrière que le bord avant lorsque l'ouvrant 4 est fermé. L'encadrement 8 est une pièce de renfort qui augmente la rigidité des bords susmentionnés de l'ouverture 10 et est par exemple réalisé dans un acier de nuance différente à celle du panneau d'ouvrant qui est une pièce d'aspect.

Lorsque la vitre est fermée, ses bords supérieur et latéraux sont reçus dans un joint d'ouvrant 20 fixé entre la doublure 6 et l'encadrement 8 autour de l'ouverture 10. A cet effet, le joint 20 comprend une branche supérieure 22, s'étendant le long du bord supérieur 12, une branche latérale arrière 24, s'étendant le long du bord latéral arrière 14, et une branche latérale avant 26, s'étendant le long du bord latéral avant 16. La branche supérieure et les branches latérales 24 et 26 s'étendent, comme l'ouverture 10, dans un plan longitudinal lorsque l'ouvrant 4 est fermé.

Le joint 20 est formé d'une seule pièce, par exemple en caoutchouc moulé. La branche supérieure 22 comprend une lèvre 28 extérieure, par exemple deux lèvres, par lesquelles le joint 20 est fixé sur le bord supérieur 12 de l'ouverture 10. Chaque lèvre est apte à venir en appui contre la carrosserie du véhicule afin d'assurer par déformation l'étanchéité de la carrosserie formant une partie de l'encadrement de l'ouvrant.

Le joint 20 comprend une butée 30, dite « butée de claquage », d'une seule pièce avec le joint 20 et disposée dans le coin supérieur arrière 32 formé par la branche supérieure 22 et la branche latérale arrière 24. La butée 30 s'étend sensiblement perpendiculairement au plan longitudinal dans lequel s'étend le joint 20 et vers l'intérieur du véhicule 1 lorsque l'ouvrant 4 est fermé.

La butée 30 s'interpose entre l'ouvrant 4 et la caisse 2 lorsque l'ouvrant 4 est fermé et permet d'amortir le choc entre l'ouvrant 4 et la caisse 2 du véhicule lors de la fermeture dudit ouvrant. A cet effet, la butée 30 fait saillie de la doublure d'ouvrant 6, qui comprend une découpe 34 permettant le passage de la butée 30 et de l'encadrement d'ouverture qui comprend pour se faire une échancrure particulière au travers de laquelle s'étend ladite butée. L'échancrure de l'encadrement est disposée au droit de la découpe 34.

La butée 30 comprend une tige 36 solidaire à une de ses parties extrêmes du coin supérieur arrière 32 et une tête 38 solidaire de la tige 36 à son autre partie extrême. La tête 38 s'étend sensiblement perpendiculairement à la tige 36 et forme la partie de la butée 30 qui entre en contact avec la caisse 2 lors de la fermeture de l'ouvrant 4. La tige 36 passe par la découpe 34 de la doublure 6 et l'échancrure de l'encadrement d'ouverture.

La butée 30 présente de nombreux avantages.

La position de la butée 30 dans le coin supérieur arrière 32 du joint et donc sensiblement dans le coin supérieur arrière de l'ouvrant 4 permet d'amortir le choc lors de la fermeture de l'ouvrant 4 à l'endroit où le bras de levier est le plus important, ce qui rend l'amortissement plus efficace. On évite ainsi le contact violent entre l'ouvrant 6 et la caisse 2 et l'apparition d'éclats de peinture ou d'un bruit métallique de tôle désagréable lors de la fermeture de l'ouvrant 4.

La butée 30 étant formée d'une seule pièce avec le joint 20, la butée n'est pas une pièce rapportée sur l'ouvrant 4, ce qui réduit le temps de montage et rend la butée 30 plus résistante à l'arrachage.

En outre, comme la butée passe par une découpe 34 de la doublure 6, le positionnement du joint 20 par rapport à la doublure 6 est facilité car la butée 30 forme un repère pour ce positionnement. Ainsi, le temps de montage est encore réduit.

Enfin, la butée s'intègre parfaitement à l'ouvrant et ne donne pas l'impression d'une pièce ajoutée, ce qui rend l'esthétique de l'ouvrant plus agréable.

## Revendications

1. Joint d'ouvrant de véhicule automobile, destiné à être disposé sur la périphérie d'une ouverture (10) d'ouvrant (4) afin de recevoir de façon étanche une vitre de l'ouvrant (4) en position de fermeture, le joint (20) comprenant au moins une branche supérieure (22), destinée à être disposée sur le bord supérieur (12) de l'ouverture (10), une branche latérale arrière (24) et une branche latérale avant (26) s'étendant à partir de la branche supérieure (22), destinées à être disposées respectivement sur le bord latéral arrière (14) et sur le bord latéral avant (16) de l'ouverture (10), **caractérisé en ce que** le joint (20) comprend une butée (30) saillant sensiblement perpendiculairement de la branche supérieure (22), ladite butée (30) étant destinée à s'étendre vers la caisse (2) du véhicule automobile, afin d'amortir le choc entre l'ouvrant (4) et la caisse (2) du véhicule lors de la fermeture dudit ouvrant (4).

2. Joint d'ouvrant selon la revendication 1, **caractérisé en ce que** la butée (30) est disposée dans le coin (32) formé par la branche supérieure (22) et la branche latérale arrière (24).

3. Joint d'ouvrant selon la revendication 1 ou 2, **caractérisé en ce que** le joint (20) et la butée (30) sont formés d'une seule pièce.

4. Joint d'ouvrant selon l'une quelconque des revendications 1 à 3, **caractérisé en ce que** la branche supérieure (22) comprend au moins une lèvre (28) extérieure, par laquelle le joint (20) est fixé sur le bord supérieur (12) de l'ouverture (10).

5. Joint d'ouvrant selon l'une quelconque des revendications 1 à 4, **caractérisé en ce que** la butée (30) comprend une tige (36) solidaire à une de ses parties extrêmes du coin (32) formé par la branche supérieure (22) et par la branche latérale arrière (24) et une tête (38) solidaire de la tige (36) à son autre partie extrême, ladite tête (38) s'étendant sensiblement perpendiculairement à la tige (36).

6. Ouvrant de véhicule automobile comprenant un panneau d'ouvrant et un encadrement d'ouverture (8) fixés respectivement à une doublure d'ouvrant (6) et localement l'un à l'autre, le panneau et l'encadrement d'ouverture (8) étant destinés à s'étendre à l'extérieur du véhicule et la doublure (6) étant destinée à s'étendre à l'intérieur du véhicule, l'encadrement (8) et la doublure (6) comprenant chacun une ouverture (10) disposée l'une en regard de l'autre, un joint d'ouvrant (20) étant disposé entre l'encadrement (8) et la doublure d'ouvrant (6) sur la périphérie desdites ouvertures (10), **caractérisé en ce que** ledit joint (20) est un joint selon l'une quelconque des revendications 1 à 5.

7. Ouvrant selon la revendication 6, **caractérisé en ce que** la doublure (6) comprend une découpe (34), la butée (30) du joint (20) étant introduite dans ladite découpe (34) de sorte à saillir de la doublure d'ouvrant (6) vers l'intérieur du véhicule automobile.

8. Ouvrant selon la revendication 7, **caractérisé en ce que** l'encadrement comprend une échancrure, la butée (30) du joint (20) étant introduite dans ladite échancrure, l'échancrure étant disposée au droit de la découpe (34) pratiquée sur la doublure d'ouvrant (6).

9. Véhicule automobile comprenant une caisse (2) et un ouvrant (4), **caractérisé en ce que** l'ouvrant (4) est un ouvrant selon l'une quelconque des revendications 6 à 8, la butée (30) étant disposée entre l'ouvrant (4) et la caisse (2) lorsque l'ouvrant (4) est fermé.
